# EUROPEAN PATENT SPECIFICATION

(11) **EP 0 430 567 B1**
(45) Date of publication and mention of the grant of the patent: **01.03.1995**
(21) Application number: 90312675.3
(22) Date of filing: 21.11.1990
(51) Int. Cl.: B31D 1/02, G09F 3/02

(54) **Method for integrated label making**
Verfahren zum Herstellen von Etiketten
Procédé de préparation des étiquettes

(30) Priority: 24.11.1989 GB 8926693; 25.11.1989 GB 8926697; 25.11.1989 GB 8926698
(43) Date of publication of application: 05.06.1991
(73) Proprietor: KO-PACK EUROPE LIMITED, Orton Southgate, Peterborough PE2 0XU (GB)
(72) Inventor: Kobayashi, Junichi, Peterborough, Cambs PE2 0JS (GB)
(74) Representative: Archer, Philip Bruce

(56) References cited:
- EP-A- 0 044 889
- FR-A- 2 265 142
- FR-A- 2 597 405
- FR-A- 2 634 931
- GB-A- 2 143 204
- GB-A- 2 209 992
- US-A- 4 032 679
- US-A- 4 359 358

## Description

This invention relates to a method for integrated label making, and the products thereof. An example of the application of the method of the invention is to simple label structures in which a web of labels is assembled with a backing web suitably treated with a release material, such as silicone, whereby the label web can be readily removed from the backing web and the labels themselves applied to a product. The invention is also applicable to more complex label structures, such as those in which, for example, two label webs are assembled, one on top of the other, with a backing web below them suitably treated with a release material. Such a label will be referred to herein as a "Piggy-Back" label. Broadly speaking, certain aspects of the invention are applicable to any label structure in which a backing web coated with a release material is employed. The invention is applicable also to structures not strictly intended as labels, for example coupons and the like, in which two or more webs are assembled to produce a laminar assembly of two or more layers. The invention may apply to such a structure whether or not it is assembled from two or more webs or by a technique in which individual label-like elements are individually assembled.

In the case of simple label structures of the kind in which a continuous web of labels connected end to end is superimposed on a continuous web of backing material suitably coated with release material such as silicone, such an assembly has very limited utility. It is perfectly effective for labelling purposes in the sense that the printed matter on each label is, after application of the label to a product, properly displayed thereon. However, the label has no other function, and can display only whatever information or other material can be printed on the available area of its surface. This is somewhat limiting, and various proposals have been made for providing more information in various ways. Moreover, the web of backing material represents a source of cost inefficiency in the sense that once it has been peeled away from the label web, its job is done and it is discarded.

Proposals have been made for piggy-back labels in which a label assembly, otherwise as described in the preceding paragraph, is applied to a product, but the label assembly has two label layers, and the upper label layer can be peeled off and discarded by the user when necessary or desired. This means that, effectively, the amount of information conveyed on the label assembly can be doubled. Moreover, the product can still be properly identified by the under-label even after the upper label has been removed.

However, the piggy-back label described above is itself somewhat limited in its efficiency and economy in the sense that it requires three layers or webs of paper or plastics or textile material together with two layers of adhesive and one layer of silicone or other release material.

GB-A-2,143,204 discloses a self-adhesive label mounted on a backing release web of self-imaging material. A portion of the backing web is cut and is carried with the label when the latter is removed. Likewise, the label itself is cut to provide a secondary label portion itself removable from the remainder of the label. Due to the nature of the self-imaging material, any information written/printed on the label prior to removal is replicated on the release web to provide a primary record. Likewise, any information written on the secondary label portion is duplicated on that portion of the backing web removed with the label, to provide a secondary record when the cut portion of the label is removed.

We have identified the fact that significant further economies and efficiencies and improvements in performance of label assemblies of this kind are desirable.

Accordingly, it is an object of the present invention to provide a method of making labels for application to a product, together with labels produced by such a method, and labels per se, offering improvements in relation to one or more of the matters discussed herein, or generally.

According to the invention there is provided a method of making labels for application to a product, products of such method, and labels per se, as defined in the accompanying claims.

In a preferrred embodiment, a method of making labels for application to a product comprises providing a label web of paper or plastics or textile material to carry the information or other matter to be displayed by the labels. Matter to be displayed on the labels is printed on the label web, and adhesive is applied thereto for the surfaces of the labels which are to adhere to the product. The label web is assembled in contact with a corresponding backing web of paper or plastics or textile material, of which the face for contact with the label web is coated with a release material, such as silicone.

The method further comprises the step of causing the backing web to be subjected, prior to assembly with the label web, to the step of coating said face of the backing web with the release material by passing the web through a release material application station. Then, the web is passed through a curing station for the release material, before proceeding onwards for assembly with the label web.

In the preferred embodiment, the release material comprises silicone and the curing station effects curing by use of ultra-violet radiation.

The station for application of the release material, or that station and another such station, applies the release material to both sides of the backing web, in one embodiment. Then the backing web is assembled with a second label web carrying printed matter and having on one face adhesive to cause the label web to adhere to a product to be labelled, and the thus-assembled product has the first and second label webs adhering to the backing web on opposite sides thereof.

In the preferred embodiment, a processing step is carried out on the backing web prior to the step of passing the backing web through the release matcrial application station, such processing step being of a kind which could not be performed on the backing web after application of the release material. Thus, one example of such a step, is the printing of matter on one or both faces of the backing web.

The preferred embodiment also discloses a machine or apparatus for carrying out the method as identifed above, together with a label or a web of labels made by such a method.

A further preferred embodiment includes a web of labels in which the backing web is coated on both faces with a release material, but such coating is performed prior to entry or assembly of the web into the apparatus carrying out the steps of the method of the invention, and the backing web is assembled with label webs on both of its faces.

In a further preferred embodiment a label for application to a product comprises a backing layer carrying a release material on one face and a label layer carrying an adhesive on one face to secure the label to a product in due course, such face being adhered to the backing layer and being separable therefrom for application to a product. The label comprises a removable portion which can be peeled-off or otherwise removed to expose information or to display material below it. The label is characterised by the feature that the removable portion comprises a portion of the label layer, and the information or display material below that removable portion is provided on a separable portion of the backing layer, which separable portion remains adhered to the label layer when the label layer is removed from the backing label. In addition, the separable portion of the label layer at least partially overlaps with the removable portion of the backing layer, and can be removed to expose the latter so that the information or display material carried thereby becomes visible.

Also in the preferred embodiment, the separable portions of the labels are substantially aligned, one above the other, in the assembled condition of the label. Both separable portions lie wholly withinthe external periphery of the backing layer and the label layer. The separable portion of the label layer is smaller than that of the backing layer, and in the assembled condition of the label lies wholly within the periphery of the separable portion of the backing layer.

The separable portion of the label layer has the adhesive thereon to secure the label layer to a product, and such adhesive is on the surface which contacts the separable portion of the backing layer. In use, as the label layer is peeled from the backing layer from the outer periphery inwards, the peripheral band of adhesive between the two layers, which lies outwardly of the periphery of the separable portion of the label layer, promotes initial separation of the separable portion of the backing layer before the peeling action reaches the separable portion of the label layer. As a result, the separable portion of the backing layer begins to peel first and is preferentially removed.

Embodiments of the invention will now be described by way of example with reference to the accompanying drawings in which :-
Fig 1 shows, diagrammatically, a section through a simple previously proposed label consisting of a label web super-imposed on a backing web;
Fig 2 shows, in a view similar to Fig 1 a section through another previous proposal, namely a piggy-back type label;
Fig 3 shows a corresponding section through a double-sided label assembly according to the invention;
Figs 4, 5, 6 and 7 show corresponding sections through a second embodiment according to the invention illustrating stages in the removal of the label web from the backing web seem in Fig 4, and the subsequent application, seen in Fig 6 of the label web to a product, and the subsequent removal, seen in Fig 7 of a portion of the label web; and
Fig 8 shows a sectioned elevational view of a label making press.

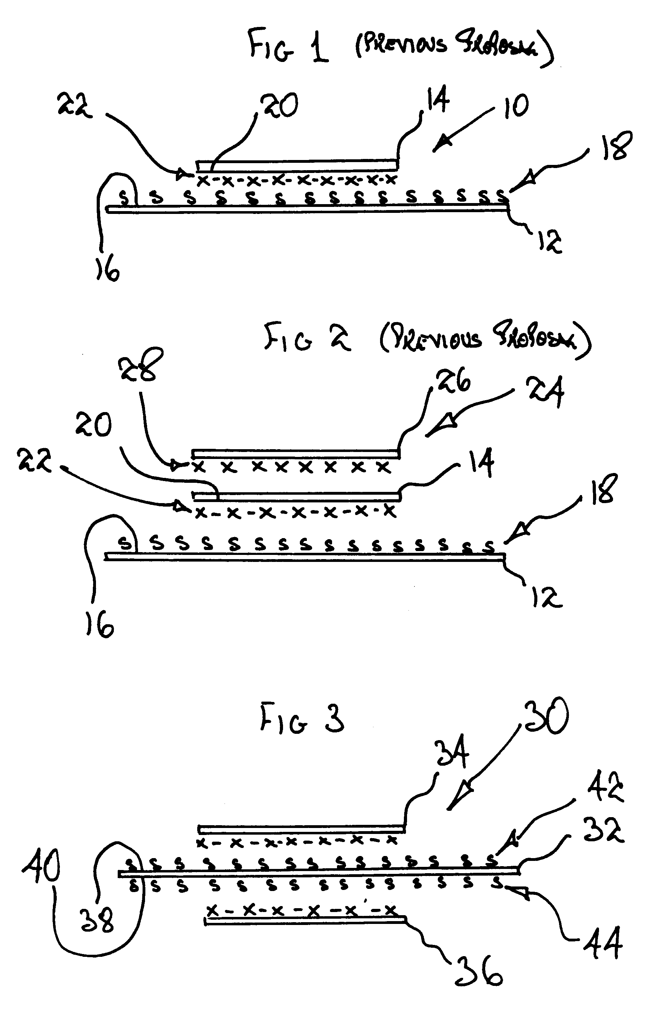

As shown in Fig 1, a previously proposed label assembly 10 comprises a backing web 12 and a label web 14.

The backing web 12 is coated on its upper face 16 with a release material 18 identified by the letters "S" in the figure, denoting that the release material is constituted by a layer of silicone. The drawing is, of course, entirely diagrammatic so far as concerns the proportions and dimensions of the label layers and the thicknesses of the layers of release material, adhesive etc.

The underside 20 of label web 14 is coated with a layer 22 of adhesive suitable for securing the labels of label web 14 to a product.

In use, the label assembly seen in Fig 1 is disassembled by peeling the label web 14 away from the backing web 12, and applying the individual labels to a product, whereupon the backing web 12 is discarded.

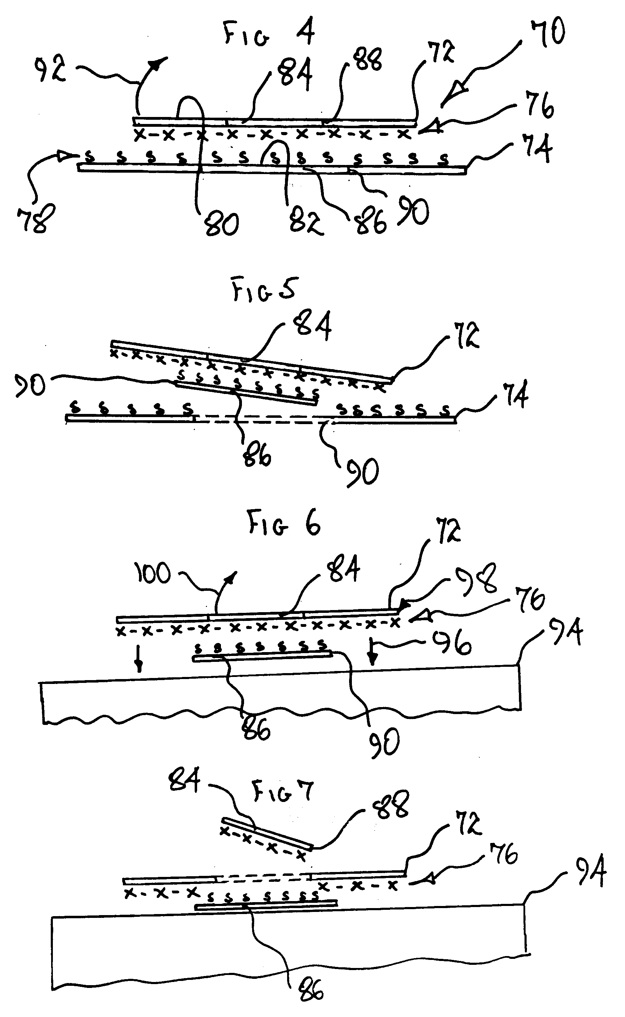

Fig 2 shows another previous proposal, in the form of a piggy-back label. This is otherwise constructed as in Fig 1, except as mentioned below. Therefore, the elements common with Fig 1 have been numbered accordingly. However, in the label assembly 24 of Fig 2 a secon label web 26 is mounted on label web 14 in "piggy-back" manner, and is secured thereto by a layer 28 of peelable adhesive, whereby the piggy-back labels 26 can be removed after application to a product, without damaging the lower label layer 14, so as to reveal printed matter carried thereon.

Having now described two previous proposals, a method and a product according to the present invention will now be described, making reference first to Fig 3 of the accompanying drawings.

As shown in Fig 3, a web 30 comprises an assembly of a backing web 32 and first and second label webs 34, 36 respectively. Backing web 32 is coated with release material S on its opposite faces 38, 40. In this embodiment, label webs 34, 36 are, in themselves, constructed as in the labels of Figs 1 and 2, that is to say the label web 14 shown therein. In Fig 3 the layers of release material S are identified by reference numerals 42, 44.

Turning back to consider the previous proposals of Figs 1 and 2, in these constructions the backing web 12 is coated with the layer 18 of release material S on one face only. The other face is "plain", that is to say the other face is simply untreated web material, for example paper. Webs of this kind, manufactured by conventional techniques involving stepwise curing of the release material S in suitable ovens are conventionally empolyed for the production of the label assemblies of Figs 1 and 2. Such backing webs are conventionally available for label manufacture. The webs are produced using curing ovens of a certain fixed length whereby such a length of the web can be cured at a time, followed by stagewise curing of successive lengths. In view of the time taken to effect curing, and the dimensions of the curing oven required, it has not (to the knowledge of the applicants) previously been possible to provide for curing of the release material in situ in the apparatus used for label manufacture. It has been essential to buy-in the pre-manufactured product, and to use this in the manner already described above.

We have determined that it is possible by the method of the invention to effect application of a release material, such as silicone, within the press or apparatus used for label manufacture, or an adjacent apparatus, to apply the release material to a plain paper or plastics or textile material web, in a continuous process, and then subsequently, likewise in a continuous process, to cure the release material, such as silicone. Fig 8 of the accompanying drawings shows apparatus applicable for this purpose.

As shown in Fig 8, the three webs 32, 34 and 36 (of regular plain label stock or label face paper) are handled by the press 50, as indicated. The label webs 34 and 36 enter the press 50 at the left hand end, as seen in Fig 8 and pass around guide rollers 52 and through printing stations 54 at which the information or display matter is suitably printed on the webs before pressure-sensitive adhesive is applied, for example at stations 56 and 58. The adhesive may be a hot melt or a solvent or aqueous adhesive composition, and is applied as just one step in the single-pass operation performed by the press.

As regards backing web 32, this is fed from a drum 60 through stations 62 and 64 providing for, successively, application of release material to one side of the web followed by continuous ultra-violet curing ,of the thus-coated side of the web. Such treatment is then followed by similar treatment of the opposite side of the web by corresponding treatment stations (not shown). The double-sided web 32 is then passed for assembly with the webs 34 and 36, as shown, and the assembled web 30, comprising the backing web and the two label webs, as shown in Fig 3, is then wound onto a drum 66, as indicated.

As regards the application of the release material to the backing web 32, such application can be made by means of presently available web treatment equipment whereby the release material is applied as a uniform layer to the web 32. The composition of the release material prior to curing is based on a silicone-containing composition, but with the modification whereby it is susceptible to ultra-violet curing on a continuous basis. Such a composition is available from Ko-Pack (UK) Limited of Bakewell Road, Orton Southgate, Peterborough, PE2 OXU, UK

As regards the ultra-violet curing station, this comprises ultra-violet radiation generating apparatus adapted to apply such radiation to the relevant surface of the web whereby the uncured release material composition is rapidly cured, or at least curing is initiated, during the time while the web passes through the station. Curing may be allowed to continue and become complete after emerging from the station.

In this manner, and as illustrated in Fig 3, it is possible to produce a web, as shown at 30, in which the amount of label material available for product labelling is doubled with respect to the previous proposals, while requiring only the mere treatment of the reverse side of the backing web with release material, as described above. In this way, a very substantial increase in efficiency is secured. This improvement in efficiency and cost effectiveness could have been achieved at any time by use of a double-sided backing web manufactured by conventional equipment, if such a step had been obvious. To the best of the applicants' knowledge, no such proposal has ever been made or carried out commercially.

It will now be understood that by virtue of the provision of stations for application of release material and subsequent curing within the press 50 and prior to asembly with the label webs, the opportunity arises to perform on the backing web treatment stages such as printing which are not possible with prior art proposals in which the backing web is coated with release material and cured quite separately, usually by a third party organisation.

Thus, in the apparatus of Fig 8, it is possible to provide for printing of the backing web 32 prior to application of release material and assembly, and all the operations are carried out in a single pass of the web material through the press. Naturally, this applies to both surfaces of the backing web, or to either of them. The benefits of in-situ application and curing of release material thus provides advantages even for a backing web which, as in the prior art proposals, has release material only on one face.

The printing of the face of the backing web which is to be coated with release material is performed at any suitable printing station (for example the station 67) provided within the press 50, and such station is located upstream of the release material application station.

By printing on the paper label stock web below the release material, information is available for the user after peeling off the label material mounted on the backing material. This might well be of benefit to the user of such a web, by providing suitable instructions relating to the labelling process. Equally, such printed material on the backing web could be of use in connection with coupons, as opposed to labels, where the backing web would then form an integral part of the coupon. In such a case, the backing web might well be printed likewise on its reverse side, though that side might well not need release material if no "label" were to be applied to it.

In the embodiment shown in Figs 4 to 7, there is provided a label construction in which, in a more sophisticated way, advantage is taken of the ability to print matter on the backing web, even though this is coated with a release material.

Hitherto, attempts to print matter on release-material-coated backing webs have failed due to technical printing difficulties caused by the presence of the release material itself. Infact it has proved impossible to print onto the release material surface itself. The ability to print prior to application of release material is a considerable improvement in this regard.

Turning now to Figs 4 to 7, it will be seen that in Fig 4 the label assembly 70 is constructed in a manner similar to one side of the assembly seen in Fig 3.

Thus, label assembly 70 comprises a label web 72 and a backing web 74, the label web having an adhesive layer 76 and the backing web having a layer 78 of release material S. The label web 72 has matter printed on its upper surface 80. The backing web 74 has matter printed on the surface 82 of an inner portion thereof, as described more fully below.

As shown in Figs 4 to 7, both label web 72 and backing web 74 have respective removable portions, corresponding to each label of the continuous webs, these portions 84, 86 being positioned one underneath the other, and the removable portion 84 of the label web being smaller than that of the backing web. The latter is the portion of the backing web 74 which has matter printed thereon, as described above.

The boundaries of these removable portions 84 and 86 are indicated by reference numerals 88 and 90 respectivley. In this embodiment, the boundary 88 lies wholly within the boundary 90. The shapes of these boundaries may be varied according to choice. The boundaries are produced by a die-cutting operation performed by a suitable station within the press 50.

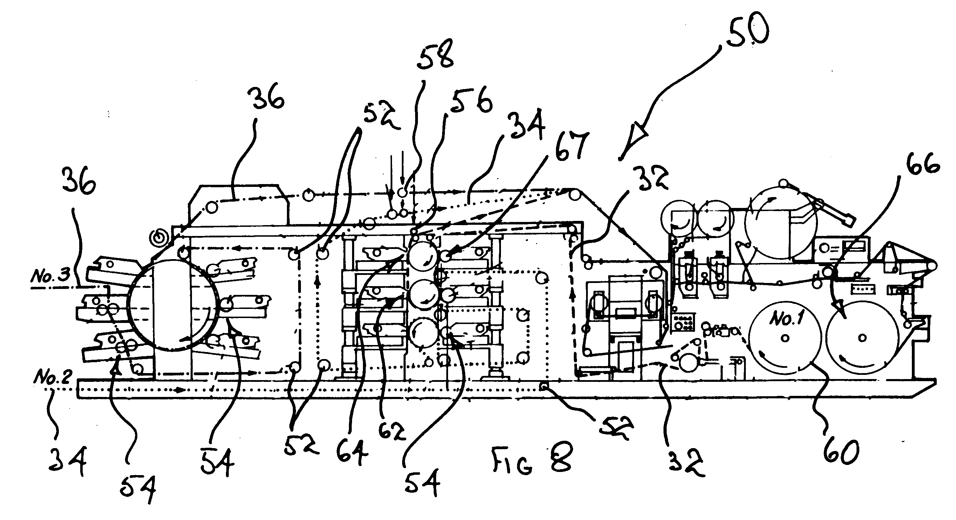

In use, the assembly 70 is produced by the press 50 in a manner closely corresponding to that already described above in connection with the embodiment of Fig 3. When it is desired to apply the label to a product, the sequence of operations is as follows :-
First, as indicated in Fig 4 by the arrow 92, the label web 72 is peeled (starting at the outer periphery and working inwards) away from the backing web 74. The adhesive layer 76 is quite readily parted from the silicone-coated backing web, but when the peeling process reaches the periphery 90 of the removable portion 86 of the backing web, the latter comes away from the rest of the backing web, as shown in Fig 5, suitably held by the adhesive. The remainder of the peeling action has no effect on the removable portion 84 of the label web.

Then, as shown in Fig 6, the assembly of Fig 5 is applied to a product 94. Arrows 96 indicate application of the assembly to the product. The product is then marked with the label 98 of which the central portion 84 is removable as indicated by arrow 100. This can be achieved by the user's finger action. The portion 84 readily comes away from the portion 86 below it by virtue of the release material on the latter. The latter is retained not only mechanically by virtue of its location below label 98, but by virtue of the fact that it is held by a peripheral zone of the adhesive layer 76. Thus, the printed matter on portion 86 of the backing web is now exposed to view.

Interestingly, in the above embodiments there has been provided a method of making labels, and products obtainable therefrom inwhich the hitherto unobtainable provision of printed matter on a backing web coated with release material has enabled the provision of label assemblies making significant improvements in cost and materials efficiency, these including a double sided label assembly and label assembly as shown in Figs 4 to 7 in which the benefits of a "piggy-back" type label have been achieved without the need to provide three webs with attendant adhesive and other treatment stages, whereby cost efficiency is improved.

## Claims

1. A method of making a label for application to a product, the method comprising:-
a) providing a backing web (74) carrying a release material on one face;
b) providing a label web (72) carrying an adhesive on one face for securing the label (72) to the product in due course;
c) assembling said backing web (74) and said label web (72) with said adhesive (76) face-to-face with said release material (78) and the layers being separable for application of the label (72) to a product;
d) the label (72) comprising a removable portion (84) which can be peeled-off or otherwise removed to expose information or display material below it;
e) the step of providing said removable portion (84) as a portion of each label (70) of said label web (72);
f) providing said information or display below said removable portion (84) on a separable portion (86) of said backing web (74) which remains adhered to said label web (72) when the latter is removed from the backing web (74);
g) forming said assembly of the backing web (74) and the label web (72) so that the separable portion of the label layer (84) at least partially overlaps with said removable portion (86) of the backing layer, and the former of these being removable to expose the latter so that information or display material on the latter is then visible;
characterised by the step of
h) causing said backing web (74) to be coated with said release material on said at least one face during said method and;
i) said information or display material being printed onto said face of the backing layer (74) during said method and prior to the application thereto of said release material.

2. A method according to claim 1 characterised by assembling said backing web (74) and said label web (72) so that said separable portions (84), (86) thereof are substantially aligned one above the other.

3. A method according to claim 1 or claim 2 characterised by forming said separable portions of said webs (84), (86) so that both lie wholly within the external periphery of the backing web (74) and the label web (72).

4. A method according to claim 2 or claim 3 characterised by the step of forming the separable portion (84) of said label web (86) smaller than the separable portion of the backing web (86) and assembling said webs so that, in the assembled condition of the label (70), the separable portion of the label web (84) lies wholly within the periphery of the separable portion of the backing web (86).

5. A method according to claim 4 characterised in that said webs are assembled so that the adhesive (76) between said separable portions (84), (86) causes, in use, as said label web (72) is peeled from said backing web (74) from the outer periphery of the label inwards, the peripheral band of adhesive between the two webs (72), (74) which lies outwardly of the periphery (88) of the separable portion of the label web (84) , to promote initial separation of the separable portion of the backing web (86) before the peeling action reaches the separable portion (84) of the label web (72).

## Patentansprüche

1. Verfahren zur Herstellung eines Etiketts zum Anbringen an einem Produkt, umfassend:
a) die Bereitstellung einer Trägerbahn (74), die auf einer Seite ein Ablösematerial trägt;
b) die Bereitstellung einer Etikettenbahn (72), die auf einer Seite einen Klebstoff trägt, um das Etikett zu gegebener Zeit an dem Produkt anzubringen;
c) das Verbinden der Trägerbahn (74) mittels des Klebstoffes (76) mit dem direkt gegenüberliegenden Ablösematerial (78), wobei die Schichten voneinander gelöst werden können, um das Etikett an einem Produkt anzubringen;
d) wobei das Etikett einen lösbaren Bereich (84) hat, der abgezogen oder anderweitig entfernt werden kann, um die darunterliegenden Informationen oder Auszeichnungen freizulegen;
e) den Schritt, in welchem der lösbare Bereich (84) als ein Bereich eines jeden Etiketts (70) der Etikettenbahn (72) vorgesehen wird;
f) das Anbringen der genannten Information oder Auszeichnung unter dem lösbaren Bereich (84) in einem lösbaren Bereich (86) der Trägerbahn (74), der an der Ettikettenbahn (72) haften bleibt, wenn letztere von der Trägerbahn (74) entfernt wird;
g) das Herstellen der Verbindung zwischen der Trägerbahn (74) und der Etikettenbahn (72) derart, daß sich der lösbare Bereich (84) der Etikettenschicht zumindest teilweise mit dem lösbaren Bereich (86) der Trägerschicht überdeckt und daß ersterer von letzterem entfernt werden kann, um letzteren freizulegen, wodurch die Information oder Auszeichnung auf letzterem zu sehen ist;
gekennzeichnet durch den Schritt, daß
h) während des Verfahrens die Beschichtung von zumindest einer Seite der Trägerbahn (74) mit dem Ablösematerial bewirkt wird und daß
i) die Information oder Auszeichnung während des Verfahrens und vor Anbringen des Ablösematerials an der Trägerschicht (74) auf die genannte Seite der Trägerschicht (74) gedruckt wird.

2. Verfahren nach Anspruch 1, dadurch gekennzeichnet, daß die Trägerbahn (74) und die Etikettenbahn (72) derart verbunden werden, daß ihre übereinanderliegenden lösbaren Bereiche (84), (86) miteinander fluchten.

3. Verfahren nach Anspruch 1 oder 2, dadurch gekennzeichnet, daß die lösbaren Bereiche (84), (86) der Bahnen so gebildet werden, daß sie beide vollständig innerhalb des äußeren Randes der Trägerbahn (74) und der Ettikettenbahn (72) liegen.

4. Verfahren nach Anspruch 2 oder 3, gekennzeichnet durch den Schritt, in welchem der lösbare Bereich (84) der Etikettenbahn (72) kleiner als der lösbare Bereich (86) der Trägerbahn ausgebildet wird und in welchem die Bahnen derart miteinander verbunden werden, daß der lösbare Bereich (84) der Etikettenbahn im fertig angeordneten Zustand des Etiketts (70) vollständig innerhalb des Randes des lösbaren Bereichs (86) der Trägerbahn liegt.

5. Verfahren nach Anspruch 4, dadurch gekennzeichnet, daß die Bahnen so zusammengefügt werden, daß, wenn die Etikettenbahn (72) bei Benutzung vom äußeren Rand des Etiketts nach innen von der Trägerschicht abgezogen wird, der Klebstoff (76) zwischen den lösbaren Bereichen (84), (86) bewirkt, daß das außerhalb des Randes (88) des lösbaren Bereichs (84) der Etikettenbahn liegende randseitige Klebeband zwischen den beiden Bahnen (72), (74) das anfängliche Lösen des lösbaren Bereichs (86) der Trägerbahn unterstützt, bevor der Abziehvorgang zu dem lösbaren Bereich (84) der Etikettenbahn (72) fortgeschritten ist.

## Revendications

1. Procédé de fabrication d'une étiquette pour application à un produit, le procédé comprenant:
(a) la préparation d'une feuille de support (74) portant une matière anti-adhérence sur une face ;
(b) la préparation d'une feuille d'étiquette (72) portant un adhésif sur une face pour fixer l'étiquette (72) au produit en temps voulu ;
(c) l'assemblage de ladite feuille de support (74) et de ladite feuille d'étiquette (72) de sorte que ledit adhésif (76) et ladite matière anti-adhérence (78) se trouvent face à face, les couches étant séparables pour application de l'étiquette (72) à un produit ;
(d) l'étiquette (72) comportant une partie détachable (84) qui peut être décollée ou enlevée d'une autre façon pour découvrir des informations ou des éléments d'affichage situés sous cette partie ;
(e) l'étape de préparation de ladite partie détachable (84) comme une portion de chaque étiquette (70) de ladite feuille d'étiquette (72) ;
(f) la génération desdites informations ou éléments d'affichage sous ladite partie détachable (84), sur une partie séparable (86) de ladite feuille de support (74) qui reste collée à ladite feuille d'étiquette (72) lorsqu'on détache cette dernière de la feuille de support (74) ;
(g) la formation dudit assemblage de la feuille de support (74) et de la feuille d'étiquette (72) de sorte que la partie détachable de la couche d'étiquette (84) chevauche au moins partiellement ladite partie séparable (86) de la couche de support, la première de ces parties pouvant être enlevée pour découvrir la dernière de sorte que les informations ou les éléments d'affichage sur cette dernière sont alors visibles ;
caractérisé par l'étape de :
(h) application de ladite matière anti-adhérence sur ladite au moins une face de ladite feuille de support (74) pendant l'exécution dudit procédé ; et
(i) lesdites informations ou éléments d'affichage étant imprimés sur ladite face de la couche de support (74) pendant l'exécution dudit procédé et avant l'application de ladite matière anti-adhérence à cette face.

2. Procédé suivant la revendication 1, caractérisé par l'assemblage de ladite feuille de support (74) et de ladite feuille d'étiquette (72) de sorte que leurs dites parties séparables (84,86) sont sensiblement alignées l'une au-dessus de l'autre.

3. Procédé suivant la revendication 1 ou la revendication 2, caractérisé en ce que lesdites parties séparables (84,86) desdites feuilles sont formées de sorte qu'elles se trouvent toutes deux entièrement à l'intérieur de la périphérie extérieure de la feuille de support (74) et de la feuille d'étiquette (72).

4. Procédé suivant la revendication 2 ou la revendication 3, caractérisé par l'étape de formation de la partie séparable (84) de ladite feuille d'étiquette (72) à une dimension plus petite que la partie séparable (86) de la feuille de support, et d'assemblage desdites feuilles de sorte que, dans l'état assemblé de l'étiquette (70), la partie séparable (84) de la feuille d'étiquette se trouve entièrement à l'intérieur de la périphérie de la partie séparable (86) de la feuille de support.

5. Procédé suivant la revendication 4, caractérisé en ce que lesdites feuilles sont assemblées de sorte que l'adhésif (76) entre lesdites parties séparables (84,86) a pour effet, en utilisation, lorsqu'on décolle ladite feuille d'étiquette (72) de ladite feuille de support (74) à partir de la périphérie extérieure de l'étiquette et vers l'intérieur, que la bande périphérique d'adhésif entre les deux feuilles (72,74) qui se trouve à l'extérieur de la périphérie (88) de la partie séparable de la feuille d'étiquette (84) favorise la séparation initiale de la partie séparable (86) de la feuille de support avant que l'action de décollement atteigne la partie séparable (84) de la feuille d'étiquette (72).
